**Europäisches Patentamt**

**European Patent Office**

**Office européen des brevets**

(11) Publication number : **0 599 541 A2**

(19)

(11) Publication number : **0 599 541 A2**

(12) # EUROPEAN PATENT APPLICATION

(21) Application number : **93309170.4**

(22) Date of filing : **17.11.93**

(51) Int. Cl.$^5$ : **G01N 21/35, G01N 21/61**

(30) Priority : **20.11.92 US 979818**

(43) Date of publication of application :
**01.06.94 Bulletin 94/22**

(84) Designated Contracting States :
**CH DE ES FR GB IE IT LI NL SE**

(71) Applicant : **SENSORS, INC.**
**6812 South State Road**
**Saline Michigan 48176 (US)**

(72) Inventor : **Black, Karl H.**
**8080 Huron Street**
**Dexter, Michigan 48130 (US)**
Inventor : **Armstrong, Walter I.**
**227 South Ann Arbor Street**
**Saline, Michigan 48176 (US)**

(74) Representative : **Robinson, Anthony John**
**Metcalf et al**
**Kilburn & Strode**
**30 John Street**
**London, WC1N 2DD (GB)**

(54) **Infrared gas analyzer.**

(57)  An infrared gas analyzer (15), which is adapted to miniaturization, includes a source (36) for emitting infrared radiation along an optical path, a detector (50) positioned in the optical path to detect the radiation and produce a detector output, and a sample chamber (32) positioned in the optical path between the source and the detector for containing a sample gas including the component gas to be detected. The source includes an infrared emitter that is enclosed within a gas-impervious envelope (48) that is void of reactive gases. The source is a conventional incandescent light source that is operated at 50% of rated voltage in a continuous, non-chopped manner, with all of the radiation being directed through the sample chamber. The source is optically coupled directly with the sample chamber in order to avoid the reflection of infrared radiation back toward the source. A control is provided for controlling the source and processing the detector output to a component gas indication. The control processes the detector output continuously to the component gas indication with a response time of less than 250 milliseconds. The control also processes the detector output to a component gas indication independent of any reference signal.

FIG. 4

EP 0 599 541 A2

This invention relates generally to gas analyzers for detecting one or more component gas concentrations in a sample and, more particularly, to non-dispersive infrared gas analyzers.

Non-dispersive infrared gas analyzers have long been known. Such analyzers direct a source of infrared radiation along an optical path in a preselected spectral band having at least one absorption line of the component gas to be detected. A detector, positioned in the optical path, detects radiation in the preselected spectral band and produces a detector output. A sample chamber is positioned in the optical path between the source and the detector in order to contain a quantity of the sample gas, which includes the component gas to be detected. Such infrared gas analyzers have suffered from numerous problems. Their response time, being on the order of one to three seconds, is much too slow for many applications. For example, it is not practical to accurately track a patient's respiration carbon dioxide level with an instrument having a response time of between one and three seconds. Furthermore, known systems have been plagued with temperature and age drift problems, which has resulted in costly and complicated compensation schemes. Such compensation schemes further limit the adaptability of the instrument because they increase the size and reduce the reliability of the instrument.

Sources for infrared gas analyzers radiate electromagnetic energy in the infrared band by applying a current to a resistance element, such as a tungsten alloy filament. In order to increase the emissivity of the source, it is known to run the source at ever-increasing temperatures. One difficulty with such an approach is that it increases the oxidation of the source element. Such oxidation not only reduces the efficiency of the source, but results in a significant amount of drift in the source emissivity over time. This instability must be compensated for in order to avoid a resulting inaccuracy in analyzer readings. One approach at solving this problem has been to coat the element with a ceramic jacket in order to avoid oxidation of the elements. Although this approach may reduce oxidation of the element per se, various oxides are still formed and deposited on the ceramic layer resulting in undesirable variation in the source emissivity.

In order to overcome the degrading effects of source oxidation on analyzer accuracy, the prior art has attempted to sense the level of source emissivity by placing, for example, temperature sensors in a position to monitor the temperature of the source. Because source emissivity is proportional to temperature, the output of the temperature sensor may be used in a feedback loop to regulate the current applied to the source and, in theory, maintain a constant level of emissivity of the source. The principle behind this approach is that, if source emissivity is regulated to a constant level, system drift will then be kept to a minimum. In practice, this has not worked satisfactorily. The extensive amount of heat generated by the source introduces second and third order errors in the detector circuitry, as well as in the system's optics. These errors have proven to be significant in degrading system performance. An alternative approach has been to apply the output of the source temperature sensor to regulate the detector circuitry. This has proven to be equally futile for the same reasons. The heating of the system components by the source has introduced errors that may not be readily compensated for.

Another approach at applying compensation to a gas analyzer system has been to divide the radiation path either spatially into two beams, a reference beam and a sensing beam, or, temporally, into a sequence of intermittent transmissions between the source and detector separated by blank periods when no beam is being transmitted. The principle behind this approach is that the detection circuitry may provide an accurate reading by comparing the reference beam, or period, with the sensed beam, or period, in order to subtract the effect of source strength from the detected signals. One approach at temporally dividing the detected signal into intermittent pulses is by chopping the light source utilizing a mechanical vibrating device or rotating device. This approach has several difficulties. The requirement for a mechanical device not only adds to the bulk and complexity of the system, but also adds to the system's low reliability. Furthermore, the thermopile detectors that are commonly used in infrared gas analyzers respond very slowly to the large swing in the detected beam between the blank periods and the sensing periods. This contributes to a system response time on the order of one to three seconds for such systems.

Another approach to temporally dividing the beam into intermittent segments is by switching the source periodically between off and on conditions. Because source emissivity is a function of heat output, they are not readily switched between off and on conditions because the heat must dissipate between each interval. As a result, switched source gas analyzers have the same difficulty of slow system response time as do the mechanically chopped beam systems. Furthermore, the periodic switching of the source introduces temperature variations to the system components, which not only degrades the system's longevity but also make appropriate compensation impractical.

It is an object of the present invention to reduce or overcome at least some of the problems of the prior art set out above. Thus, according to the present invention, an apparatus for detecting at least one component gas in a sample comprises: a source adapted to radiating and directing the radiation along an optical path, the radiation having at least one absorption line of the component gas to be detected; a detector positioned in said optical path and adapted to detecting radiation at said at least one absorption line and producing thereby a detector output; and a sample chamber positioned in said optical path between said source and said detector and adapted to contain a quantity of sample gas including the component gas to be detected.

The present invention makes it possible to construct a gas analyzer having a response time never before achieved in the art. This is accomplished in a manner that reduces power requirements to a level which allows operation of the gas analyzer from portable power sources, such as miniature batteries. This combination of features allows applications never before achieved with conventional gas analyzer technology. For example, response times sufficiently fast to allow real time monitoring of the carbon dioxide level of a patient's respiration are now possible. With increased reliability and superior drift performance characteristics, gas analyzer technology may be incorporated into portable diagnostic instruments as an ancillary feature to standard diagnostic tools.

It is intended that in operation radiation is substantially continuously transmitted between the source and the sensor. Preferably, control means are provided for controlling the source and for processing the detector output to a component gas indication. The control means is independent of the emissivity of the source.

This may be accomplished, according to a preferred feature of the invention, by providing a source which includes an infrared emitter enclosed in a space defined within a gas-impervious envelope with the space being void of reactive gases. The envelope is made of a material that transmits infrared radiation. In a preferred embodiment, the space is evacuated. The material making up the envelope may be quartz or a heat-resistant glass such as that sold under the name Pyrex. In a most preferred embodiment, the source is a visible light source that is operated at approximately 50% of rated voltage.

The invention provides an exceptionally compact, low power, gas analyzer which has no moving parts. The illustrated embodiment is of a gas analyzer which is capable of operation with less than one watt of power. The internal volume of the sample chamber is approximately 0.5 millilitres in order to detect carbon dioxide at 0-20% concentrations. The entire gas analyzer occupies a volume of less than 32.8 cu cms (two cubic inches). The invention may be adapted to detecting multiple component gases in a sample in a manner which is set forth in detail in the following specification.

The invention may be carried into practice in various ways but one inforced gas analyzer constructed in accordance with the invention and a modification of this analyzer will now be described by way of example with reference to the accompanying drawings, in which:

Fig. 1 is a perspective view of the infrared gas analyzer;

Fig. 2 is the same view as Fig. 1 of the sensing assembly forming part of the analyzer;

Fig. 3 is an exploded perspective view of the sensing assembly in Fig. 2;

Fig. 4 is a sectional view taken along the lines IV-IV in Fig. 2;

Fig. 5 is a sectional view taken along the lines V-V in Fig. 3;

Fig. 6 is an exploded perspective view of the source assembly forming part of the analyzer;

Fig. 7 is an enlarged sectional view taken along the lines VII-VII in Fig. 6;

Fig. 8 is a sectional view taken along the lines VIII-VIII in Fig. 3;

Fig. 9 is an end elevation of the detector forming part of the analyzer;

Fig. 10 is the same view as Fig. 9 of an alternative embodiment of a detector; and

Fig. 11 is an electrical schematic diagram of a circuit forming part of the analyzer shown in Fig. 1.

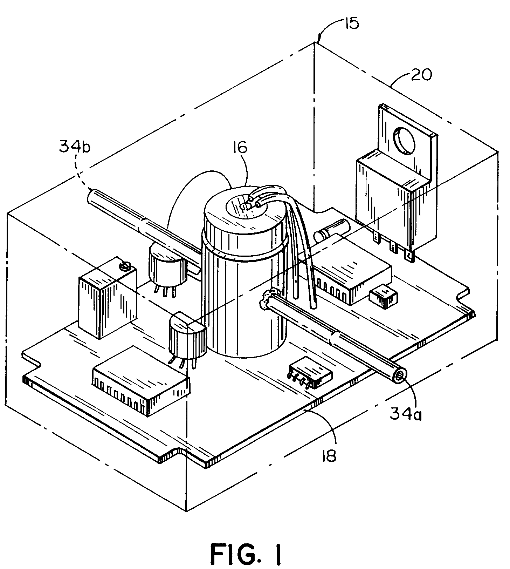

Referring now specifically to the drawings, and the illustrative embodiments depicted therein, an infrared gas analyzer 15 includes a sensor assembly 16 mounted to an electronic assembly 18 and encapsulated within encapsulation material 20 (Fig. 1). A metallic jacket (not shown) encloses encapsulation material 20. In the illustrated embodiment, encapsulation material 20 is silicone rubber and is surrounded by a sheet-aluminium jacket.

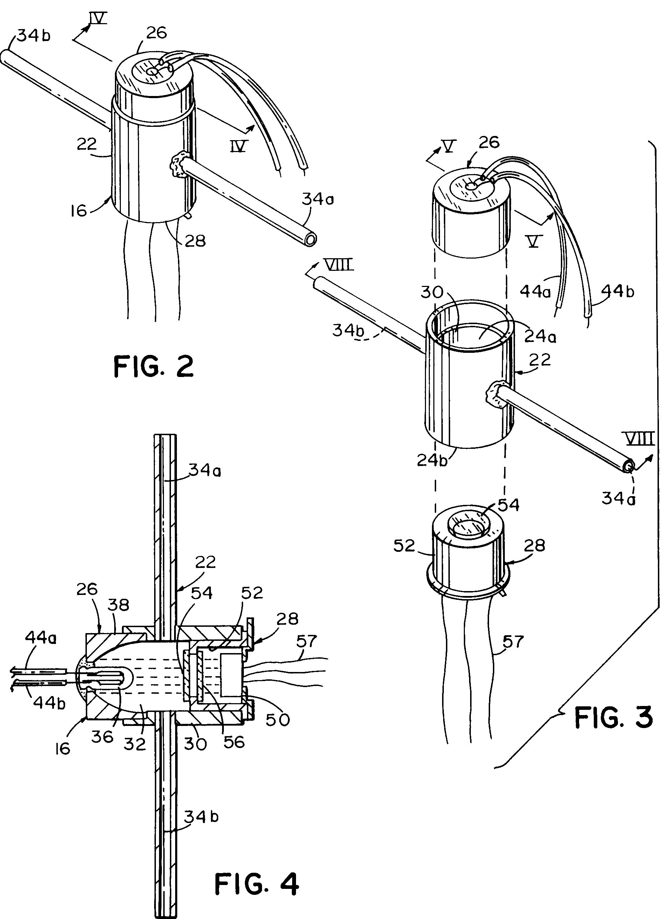

Sensor assembly 16 includes a tubular sample chamber assembly 22 having open ends 24a and 24b thereof, a source assembly 26 fitted within one open end 24a and a detector assembly 28 fitted within the other open end 24b (Figs. 2-4). Sample chamber assembly 22 includes a cylindrical wall 30 which, along with source assembly 26 and detector assembly 28, encloses a sample chamber 32. A pair of tubes 34a, 34b penetrate wall 30 in order to provide ingress and egress of a sample gas into sample chamber 32. The sample gas may be supplied to sample chamber 32 under positive pressure by a sample pump (not shown) or by diffusion. In the illustrated embodiment of a carbon dioxide ($CO_2$) gas analyzer for sensing between zero and 20% carbon dioxide levels, sample chamber 32 has a volume of 0.5 millilitres. For detecting component gases at lower concentrations, it may be necessary to increase the volume of sample chamber 32 correspondingly.

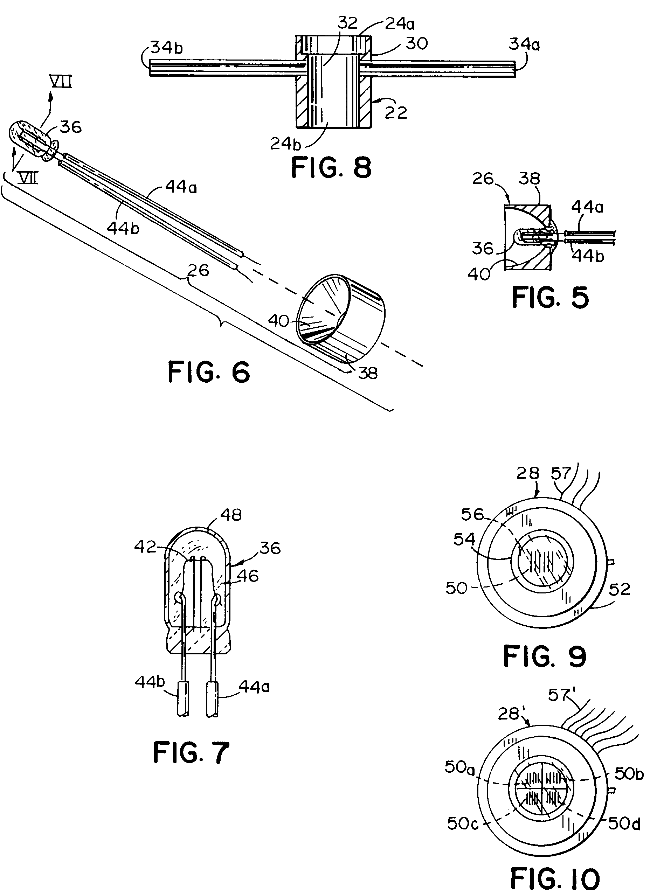

Source assembly 26 includes a source 36 and a reflector 38. Reflector 38 is made from aluminium and has a polished reflecting surface 40 that is either elliptical or parabolic in shape. Source 36 includes an infrared emitting element 42, which is supplied with an electrical current from electronic assembly 18 through electrical leads 44a and 44b. Emitting element 42 is positioned within a chamber 46 (Fig. 7). Chamber 46 is surrounded by an envelope 48 made of a material that is a good transmitter of electromagnetic radiation in the infrared band of between 0.5 micrometres and 5.0 micrometres. Chamber 46 is void of any active gases which may react with the material of emitting element 42. In a preferred embodiment, chamber 46 is evacuated to form a vacuum. Envelope 48 must also be made from a material which is capable of being moulded and which is gas impervious in order to avoid any exchange of atmospheric gas with chamber 46. In the illustrated embodiment, envelope 48 is made from quartz, although a heat resistant glass sold under the trade mark Pyrex is a suitable alternative. Emitting element 42 is a filament of tungsten alloy. In the illustrated embodiment, source 36 is commercially available and is marketed by Chicago Miniature under Model No. 7219. Chicago Miniature for Model No. 7219 is marketed as a miniature panel light and is, therefore, commercially provided for the purposes of generating visible light. In the illustrated embodiment, source 36 is energized from a power source at a voltage level that is 50% of the rated voltage advised by Chicago Miniature Model No. 7219. Accordingly, in use, emitting element 42 gives off very little visible light. It emits primarily in the infrared region. Although, in the preferred embodiment, a commercially available miniature lamp is used, not all incandescent lamps are suitable. Incandescent lamps are typically enclosed with glass envelopes. Glass is a poor conductor of infrared radiation and, typically, cuts off transmission at wavelengths well below the infrared band.

Detector assembly 28 includes a 48-junction thermopile sensor 50 enclosed within an argon-filled container 52. Container 52 is closed by a sapphire window 54, which allows infrared radiation to penetrate the container. An optical filter 56 is positioned within container 52 in the radiation pathway between source 36 and sensor 50. Optical filter 56 passes energy at the wavelength of the absorption line of the component gas to be detected. In the illustrated embodiment, detector assembly 28 is commercially available and is marketed by Dexter Research under Model No. 2M. A plurality of leads 57 supply the output from sensor 50 to electronic assembly 18.

Detector assembly 28 is for the purpose of detecting a single component gas in a sample. Gas analyzer 15 may be adapted to detecting a plurality of component gases in a sample by utilizing a detector assembly 28' (Fig. 10) in which a plurality of sensors 50a, 50b and 50c are positioned within the radiation pathway. Each sensor 50a-50c is positioned behind an optical filter (not shown) having a transmission band at the absorption line of the component gas to be detected by the associated sensor 50a-50c. In detector assembly 28', a fourth sensor 50d is not exposed to the radiation from source 36 but is provided for the purpose of monitoring the temperature of the detector assembly for first-order temperature compensation of sensor outputs. If gas analyzer 15 is utilized to monitor the carbon dioxide level of a patient's respiration, or the carbon dioxide level within a biological test chamber, a single detector assembly 28 is provided wherein optical filter 56 transmits radiation at 4.25 micrometres. As previously set forth, concentration of carbon dioxide from between zero and 20% may be measured by a sample chamber volume of 0.5 millilitres. If gas analyzer 15 is utilized to measure automotive vehicle emission gases, a multiple sensor detector assembly 28' is utilized wherein the sensors 50a-50c are positioned behind optical filters which transmit at 3.5 micrometres for detecting hydrocarbons (hexane), 4.65 micrometres for detecting carbon monoxide and 4.25 micrometres for detecting carbon dioxide. Such a multiple sensor detector assembly 28' is commercially available and is marketed by Dexter Research under Model No. DR26 for dual sensor. A quad sensor, such as that illustrated in Fig. 10, is presently under development by Dexter Research and by Armtec.

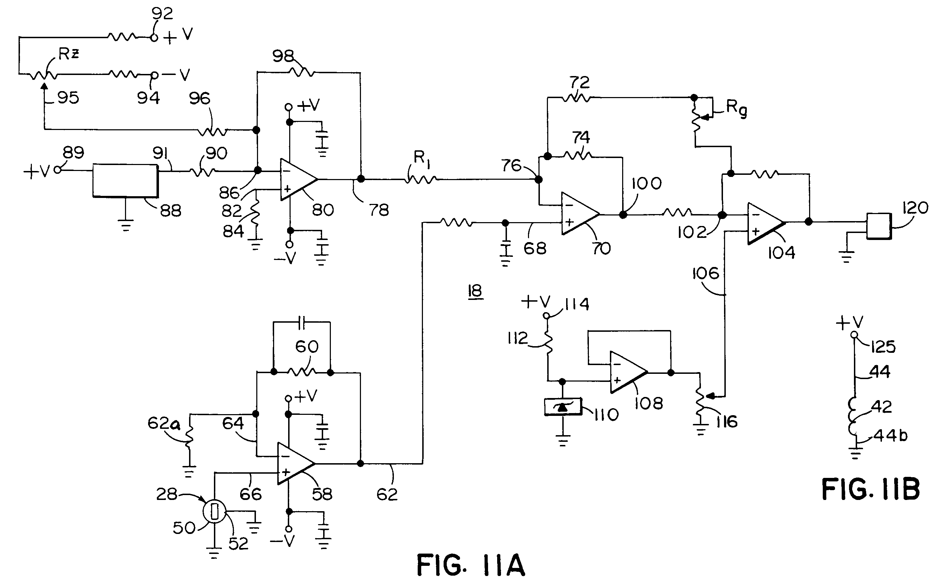

In order to provide an accurate determination of the concentration of the component gas of interest in the sample, electronic assembly 18 amplifies the signal produced by sensor 50 by a factor of approximately 50,000 and provides first-order temperature compensation for ambient temperature. This latter function is necessary because a thermopile sensor drifts at a rate of 0.4% per degree centigrade. Electronic assembly 18 includes an amplifier 58 (Fig. 11A) whose gain is established by a feedback resistor 60, connected between an output 62 and an inverting input 64, and by a resistor 62a connected between inverting input 64 and signal ground. Sensor 50 is connected between a non-inverting input 66 of amplifier 58 and signal ground. The case 52 of detector assembly 28 is also grounded. Output 62 of amplifier 58 is supplied to the non-inverting input 68 of an amplifier 70. The gain of amplifier 70 is established by feedback resistors 72, 74 and Rg and a resistor R1 connected in series with an inverting input 76. Resistor R1 is, in turn, connected with an output 78 of an amplifier 80. Amplifier 80 has a non-inverting input 82 connected to signal ground with a bias resistor 84. Amplifier 80 additionally includes an inverting input 86 connected to an output 91 of a temperature sensor 88 through a bias resistor 90. Temperature sensor 88 has an input that is connected with a source of voltage at 89. Inverting input 86 is additionally connected, through a bias resistor 96, with the wiper 95 of a potentiometer Rz connected between a positive voltage source 92 and a negative voltage source 94. Amplifier 80 additionally includes a feedback resistor 98 connected between output 78 and inverting input 86.

Output 100 of amplifier 70 is supplied to an inverting input 102 of an amplifier 104. A non-inverting input 106 of amplifier 104 is supplied with a reference voltage produced by a unity gain amplifier 108 that is supplied with a stable voltage from a zener diode 110 connected in series with a bias resistor 112 to a voltage source 114; The reference voltage level on input 106 is adjustable by an adjustable resistor 116. The output of amplifier 104 provides a voltage $V_{out}$, which is proportional to the concentration of the detected component gas, at 120.

The value of $V_{out}$ on output 120 is as follows:
$$V_{out} = (V_{ref} - V_{det}) [1 + 2R_1/R_g] + V_{offset} + V_{tempcomp}$$
where

$V_{ref}$ is the voltage at input 106;

$V_{det}$ is the voltage at output 62;

$R_1$ is the resistance of resistor $R_1$;

$R_g$ is the combined series resistance of resistors 72 and $R_g$;

$V_{offset}$ is the voltage at wiper 95; and

$V_{tempcomp}$ is the voltage at output 91.

The span of amplifier chain in electronic assembly 18 is established by the $R_1/R_g$ term and is adjustable by adjusting the value of variable resistor $R_g$. The value of $V_{offset}$, which establishes the offset of the amplifier chain, is established by adjusting the position of wiper 95 of variable resistor $R_z$. Thus, it is seen that the amplifier chain in electronic assembly 18 allows for independent adjustment of the zero offset and the span. It is also seen that the temperature dependency of sensor 50 is compensated for by temperature sensor 88 and associated circuitry. Temperature sensor 88 detects ambient temperature. Because all components of gas analyzer 15 are encapsulated by encapsulation material 20, the temperature of sensor 50 is very stable and not susceptible to abrupt changes in ambient temperature. Furthermore, any changes in the temperature of sensor 50 are accurately detected by temperature sensor 88. As set forth above, temperature sensor 88 may be sensor 50d incorporated within detector assembly 28' behind a dark panel. Although the zero offset and the span of electronic package 18 are illustrated as being adjusted by adjustable resistors $R_z$ and $R_g$, such resistors could be replaced by interconnections with an automatic control system which could supply suitable calibration voltages to the amplifier chain of the electronic assembly according to known techniques, in order to avoid the necessity for manual calibration. Thus, it is seen that electronic assembly 18 is adaptable to stand-alone operation or to interface with an automatic control system.

In the illustrated embodiment, amplifier 58 is a chopper-stabilized amplifier, which is exceptionally stable. Such amplifier is commercially available from a variety of suppliers under industry Model No. LT1050CS6. Amplifiers 70, 80, 104 and 108 are provided in a single package under Model No. LT1014DS. The positive and negative voltage sources may be supplied from a unipolar battery by the provision of a commercially available voltage converter (not shown). Emitting element 42 of source 36 is supplied continuously with a regulated DC voltage through lead 44a from a regulated DC voltage source 125 (Fig. 11B). The opposite lead 44b is connected with signal ground. The voltage at voltage source 125 is six volts DC in the illustrated embodiment. Chicago Miniature panel light Model No. 7219 has a rated voltage of 12 volts DC.

Because emitting element 42 is positioned within a chamber that is void of reacting gases, there is no potential for the formation of oxides of the material composing the emitting element or of any surrounding material. Furthermore, because the emitting element is surrounded by a vacuum, in the preferred embodiment, its colour temperature is maintained at a much lower wattage input because the emitting element is not being cooled by surrounding atmosphere. Additionally, because the emitting element is not heating the surrounding atmosphere, the detrimental effects of heating of surrounding components, resulting in second and third order errors, is virtually eliminated. Because oxidation of the emitting element does not occur, the radiation output of the element is exceptionally stable over very long periods of time. Because the source is inherently stable, there is no need for monitoring the temperature, or emissivity, of the source as an input to a stabilizing feedback control circuit, or as a compensation input to the detector amplifier circuitry, as required in prior infrared gas analyzers.

Because the source is inherently stable, there is, further, no necessity for interrupting the radiation beam between source 36 and sensor 50 to ensure a drift-free output level. Accordingly, the detrimental effects of prior art switched sources, in which system response time suffers from the relatively slow periodic cycling of the source, as well as the attendant reduction in system reliability from the thermal stress, are eliminated. The equally slow performance of the mechanically chopped systems, with the attendant reduction in system reliability from mechanical failures, are also eliminated.

The invention is capable of implementation in a system having exceptionally low noise levels and very stable, low drift, output. Importantly, the response time of the system, as defined as the time it takes to obtain a reading that swings from 10% to 90% of the span of the system, from a change of from zero gas to full scale gas at a flow rate of 250 millilitres per minute, may be reduced to below 200 milliseconds using the apparatus described. This superior response time opens the possibility for real time monitoring of patient's respiration and the like. The compact package, within which the present invention may be embodied, opens up applications never before possible for infrared gas analysis technology.

Portable hand-held engine analyzers may now be embellished with exhaust gas analysis capabilities. Such possibilities are, indeed, revolutionary.

**Claims**

1. An apparatus for detecting at least one component gas in a sample comprising: a source adapted to radiating and directing the radiation along an optical path, the radiation having at least one absorption line of the component gas to be detected; a detector positioned in said optical path and adapted to detecting radiation at said at least one absorption line and producing thereby a detector output; and a sample chamber positioned in said optical path between said source and said detector and adapted to contain a quantity of sample gas including the component gas to be detected.

2. An apparatus according to claim 1 in which the source is adapted to direct said radiation between said source and said detector substantially continuously and which includes control means for controlling said source and for processing said detector output to a component gas indication, said control means being independent of the emissivity of said source.

3. An apparatus according to claim 2 in which said control includes temperature compensation means for compensating said detector output for variations in ambient temperature levels.

4. An apparatus according to claim 1 or claim 2 or claim 3 in which said source includes an infrared emitter in a space void of reactive gases (preferably evacuated) within a gas-impervious envelope made of a material which transmits improved radiation.

5. An apparatus according to any of claims 1 to 4 in which said source radiates in a wavelength band of between approximately 0.5 and 5.0 micrometres.

6. An apparatus according to any of claims 1 to 5 which has a response time of less than approximately 250 milliseconds.

7. An apparatus according to any of claims 1 to 6 including a plurality of said detectors in said optical path and a plurality of optical filters, each associated with one of said detectors, in order to detect a plurality of component gases in a gas sample, the filters preferably having nominal transmission wavelengths of approximately 3.4 micrometers, 4.65 micrometers and 4.25 micrometers in order to detect hydrocarbons, carbon monoxide and carbon dioxide, respectively, in a sample.

8. An apparatus according to any of claims 1 to 7 in which said source is energized with less than approximately one watt of power and, preferably, said sample chamber has an internal volume of approximately 0.5 millilitres.

9. An apparatus according to any of claims 1 to 8 in which the source is a visible light source operated at approximately 50% of rated voltage.

10. An apparatus according to any of claims 1 to 9 including temperature compensation means for compensating said detector output for variations in ambient temperature levels.

FIG. 1

FIG. 2

FIG. 3

FIG. 4

FIG. 8

FIG. 5

FIG. 6

FIG. 9

FIG. 7

FIG. 10

FIG. 11A

FIG. 11B